# EUROPÄISCHE PATENTSCHRIFT

(11) **EP 3 757 387 B1**
(45) Veröffentlichungstag und Bekanntmachung des Hinweises auf die Patenterteilung: **23.03.2022**
(21) Anmeldenummer: 19182496.0
(22) Anmeldetag: 26.06.2019
(51) Int. Cl.: F03D 80/50, F03D 17/00

(54) **ERFASSUNGSVORRICHTUNG SOWIE ERFASSUNGSSYSTEM ZUR ERFASSUNG DER FORMGEBUNG UND/ODER AUSRICHTUNG VON ROTORBLÄTTERN VON WINDKRAFTANLAGEN SOWIE VERFAHREN ZUR ERFASSUNG DER FORMGEBUNG UND/ODER AUSRICHTUNG VON ROTORBLÄTTERN**
DETECTION DEVICE AND DETECTION SYSTEM FOR DETECTING THE SHAPING AND/OR ORIENTATION OF THE ROTOR BLADES OF WIND POWER SYSTEMS AND METHOD FOR DETECTING THE SHAPING AND/OR ORIENTATION OF ROTOR BLADES
DISPOSITIF DE DÉTECTION AINSI QUE SYSTÈME DE DÉTECTION PERMETTANT DE DÉTECTER LE FAÇONNAGE ET / OU L'ORIENTATION DES PALES DE ROTOR D'ÉOLIENNES AINSI QUE PROCÉDÉ DE DÉTECTION DU FAÇONNAGE ET / OU DE L'ORIENTATION DES PALES DE ROTOR

(43) Veröffentlichungstag der Anmeldung: 30.12.2020
(73) Patentinhaber: WTS - Wind-Tuning-Systems GmbH, 72766 Reutlingen (DE)
(72) Erfinder: Röhm, Klaus, 72766 Reutlingen (DE)
(74) Vertreter: Ege Lee & Roider Patentanwälte

(56) Entgegenhaltungen:
- EP-A1- 3 109 716
- KR-A- 20140 001 444
- KR-B1- 101 368 675
- KR-B1- 101 372 993
- US-A1- 2015 267 688

## Beschreibung

### ANWENDUNGSGEBIET UND STAND DER TECHNIK

Die Erfindung betrifft den Bereich der Vermessung von Rotorblättern von Windkraftanlagen.

Windkraftanlagen wandeln Energie bewegter Luft, insbesondere von Wind, in elektrische Energie. Diese elektrische Energie wird üblicherweise in ein überregionales Stromnetz eingespeist.

Windkraftanlagen verfügen üblicherweise über eine Mehrzahl von Rotorblättern, wobei Windkraftanlagen mit drei Rotorblättern die heute üblichste Bauweise darstellen. Die Rotorblätter sind üblicherweise bezüglich ihrer Neigung um ihre jeweilige Längsachse über den so genannten Anstellwinkel verstellbar (Pitchverstellung).

Es besteht der Bedarf, die Geometrie von Rotorblättern von Windkraftanlagen und/oder deren Ausrichtung präzise zu erfassen, wobei dies sowohl Rotorblätter im montierten Zustand als auch im demontierten Zustand betrifft.

Dieser Bedarf ergibt sich zum einen daraus, dass eine identische Geometrie und insbesondere Ausrichtung der Rotorblätter in Hinblick auf Leistungsfähigkeit und Minimierung von Verschleiß von großer Relevanz sind, so dass eine entsprechende Erfassung montierter Rotorblätter zum Zwecke der Gewährleistung eines wirtschaftlichen Betriebes geboten ist. Es hat sich gezeigt, dass bereits eine Winkeldifferenz von 0,5° betreffend den Anstellwinkel unterschiedlicher Rotorblätter zu einem für eine Unwucht charakteristisches Schwingungsverhalten und einer signifikant verringerten Lebensdauerführt. Eine solche Differenz kann auf eine inkorrekte Montage zurückzuführen sein, jedoch auch auf alterungs- oder beschädigungsbedingten Verzug eines Rotorblattes.

Zum anderen ist insbesondere die Erfassung der präzisen Formgebung der Rotorblätter von Interesse, um Rotorblätter bestehender Anlagen um zusätzliche Elemente ergänzen zu können. Solche zusätzlichen Elemente können insbesondere Elemente sein, die den Luftstrom am Rotor beeinflussen wie beispielsweise Verwirbelungselemente. Entsprechende Elemente sind beispielsweise aus der WO 2019/086616 A1 bekannt. Sie dienen zumeist der Steigerung der Effizienz und der Lärmminderung einer Windkraftanlage. Der Bedarf der Vermessung der Rotorblätter vor Anbringung solcher ergängzender Elemente kann insbesondere bei älteren Anlagen gegeben sein, für die keine Geometriedaten die Rotorblätter betreffend erhältlich sind. Aber auch bei Rotorblättern, deren Geometriedaten grundsätzlich bereits vom Hersteller vorliegen, kann das nochmalige Erfassen der Formgebung zweckmäßig sein, da es durch den Herstellungsprozess Abweichungen vom Sollmaß geben kann, die für die Auslegung und Anpassung von zusätzlichen Elementen zur Anbringung an den Rotorblättern von Relevanz sein können.

Die Erfassung der Formgebung eines Rotorblattes kann weiterhin auch im Rahmen der Qualitätskontrolle von Rotorblättern während oder nach der Herstellung eine Rolle spielen. Eine hierfür vorgesehene Messeinrichtung findet am Boden und vor Montage des jeweiligen Rotorblattes Verwendung.

Zur Erfassung der Rotorblätter von Windkraftanlagen im montierten Zustand ist beispielsweise unter dem Handelsnamen ROMEG M 20 G ein Lasergerät für die Vermessung der Rotorgeometrie von Wind energieanlagen bekannt, welches zur Messung an der laufenden Windenergieanlage vorgesehen ist. Die Erfassung erfolgt dabei mittels eines Laserstrahls, der auf den drehenden Rotor gerichtet wird und dessen Reflexion an den Rotorblättern erfasst wird. Auf diesem Weg ist jedoch nur eine vergleichsweise ungenaue Messung möglich. Eine Erfassung der kompletten Geometrie der Rotorblätter selbst ist hiermit nicht möglich. Auch Abweichungen betreffend den Anstellwinkel sind hierdurch nicht in der gewünschten Genauigkeit zu erfassen.

Bekannt sind Laserentfernungsmessgeräte, die auf vergleichsweise kurze Distanzen von ca. 1000 mm eine hohe Genauigkeit von ca. 0,2 mm bieten. Bekannt sind auch sogenannte Lasertracker, die mit Reflektoren arbeiten, insbesondere Prima-Reflektoren, um auf Distanzen von mehr als 100 Meter eine Genauigkeit von ca. 0,2 mm zu bieten.

Beispielsweise offenbaren die KR 101 372 993 B1, US 2015/267688 A1, KR 101 368 675 B1 und KR 2014 0001444 A Erfassungsvorrichtungen, die beidseitig eines Rotorblattes angeordnet werden können.

### AUFGABE UND LÖSUNG

Aufgabe der Erfindung ist es, eine Erfassungsvorrichtung und ein hiermit ausgerüstetes Erfassungssystem sowie ein entsprechendes Betriebsverfahren zur Verfügung zu stellen, die es gestatten, Rotorblätter kostengünstig und präzise in Hinblick auf Formgebung und/oder Ausrichtung zu erfassen.

Hierfür werden zunächst zwei verwandte Bauformen für Erfassungsvorrichtungen vorgeschlagen, die beide die Voraussetzungen dafür schaffen, eine Oberseite und eine Unterseite eines Rotorblattes gemeinsam zu erfassen.

Gemäß der ersten dieser Bauformen ist die Erfassungsvorrichtung zur Erfassung der Formgebung und/oder Ausrichtung von Rotorblättern von Windkraftanlagen mit einer Tragstruktur versehen, die über zwei Teiltragstrukturen verfügt, zwischen denen ein Aufnahmebereich für das Rotorblatt vorgesehen ist. An den beiden Teiltragstrukturen sind in Richtung des Aufnahmebereichs gerichtete Entfernungsmessgeräte zur gleichzeitigen Erfassung der Oberseite und der Unterseite des Rotorblattes vorgesehen.

Gemäß der zweiten dieser Bauformen, die jedoch auch als Ausgestaltung der ersten Bauform realisierbar ist, weist die Erfassungsvorrichtung eine Tragstruktur auf, die über den Aufnahmebereich zur Aufnahme des Rotorblattes verfügt. Zur Erfassung beider Seiten des Rotorblattes weist sie gemäß dieser zweiten Bauform mindestens zwei Kontaktkörper auf, die zur gleichzeitigen Anlage an der Oberseite und der Unterseite des im Aufnahmebereich angeordneten Rotorblattes vorgesehen sind.

Beide Bauformen gestatten es, durch eine Relativbewegung des Rotorblattes in etwa in Richtung der Profilsehne des Rotorblattes relativ zu den Messsystemen, also den Entfernungsmessgeräten oder den Kontaktkörpern der Erfassungsvorrichtung, gleichzeitig beidseitig die Oberseite und die Unterseite des Profils des untersuchten Rotorblattes zumindest abschnittsweise zu erfassen, also dessen Kontur elektronisch zu erfassen und auf Basis dessen eine Weiterverarbeitung zu ermöglichen.

Während die beiden Messsysteme als Ganzes oder die genannten Kontaktkörper in etwa in Richtung einer Profilsehne des Profils des Rotorblattes relativ zu diesem verlagert werden, werden Daten zur Entfernung der Oberfläche des Rotorblattes von den Messsystemen und/oder einem externen Bezugspunkt ermittelt.

Die so erfassten Punktpositionsdaten der Oberseite und der Unterseite werden in einer gemeinsamen Datenstruktur zusammengefügt, die die Punktpositionsdaten der Oberseite und der Unterseite in korrekter Relativanordnung zueinander umfasst. Insbesondere können diese Punktpositionsdaten Abstände zur Profilsehne des Profils in beide Richtungen umfassen. Diese Datenstruktur umfasst mindestens die Punktpositionsdaten eines Profilschnittes. Vorzugsweise wird jedoch eine entsprechende Erfassung an verschiedenen unterschiedlich zur Nabe beabstandeten Profilquerschnitten des Rotorblattes durchgeführt, so dass sich eine Datenstruktur ergibt, die ein dreidimensionales Abbild des Rotorblattes oder eines Teilbereichs hiervon darstellt.

Die so ermittelte Datenstruktur kann entsprechend dem einleitend geschilderten Bedarf genutzt werden, um zu prüfen, ob die Windkraftanlage in einer verschließarmen Konfiguration arbeitet, insbesondere also ob die Rotorblätter einen einheitlichen Anstellwinkel und/oder eine identische Formgebung aufweisen. Die Daten erlauben weiterhin auch eine Abschätzung der voraussichtlichen Lebensdauer oder eines möglichen Reparatur- oder Wartungsaufwandes. Insbesondere kann die präzise Ausmessung von Oberflächenschäden vorteilhaft genutzt werden, um Reparaturmaßnahmen wirtschaftlich zweckmäßig zu planen.

Vor allem jedoch kann die Datenstruktur verwendet werden, um ergänzende Anbauteile wie Verwirbelungselemente ggf. ohne Demontage des Rotors von der Windkraftanlage an die Geometrie der Rotorblätter anzupassen, so dass die Ausfallzeiten bei Montage dieser Anbauteile gering sind. Hierfür wird die Profilform des Rotorblattes vorzugweise mehrfach in unterschiedlichen Abständen zu einer Rotornabe erfasst.

Im Falle einer Gestaltung gemäß der ersten Bauform mit zwei Teiltragstrukturen, die jeweils Träger eines Entfernungsmessgerätes sind, sind unterschiedliche Varianten möglich. Bei der einfachsten Variante sind die beiden Teiltragstrukturen fest miteinander verbunden und bilden einen Teil einer Basis der Erfassungsvorrichtung. An den basisfesten Teiltragstrukturen sind die Entfernungsmessgeräte fest angebracht. Dieser Gesamtverbund wird zur Erfassung des Profils des Rotorblattes als Ganzes gegenüber dem Rotorblatt in etwa in Richtung der Profilsehne verlagert, während mittels der Entfernungsmessgeräte beidseitig die Oberfläche erfasst wird.

Bei einer hiervor abweichenden Variante sind die Entfernungsmessgeräte an einem gemeinsamen Teil oder separaten Teilen der Teiltragstruktur vorgesehen, der bzw. die gegenüber einer gemeinsamen Basis und hierzu ortfesten Abschnitten schlittenartig verfahrbar ist bzw. sind, insbesondere linear verfahrbar. Bei Gestaltung mit zwei solchen schlittenartig verfahrbaren Abschnitten, kann auch eine nichtlineare, beispielsweise bogenförmige oder kreisabschnittsförmige Verfahrbarkeit vorgesehen sein. Die Verlagerung erfolgt vorzugsweise mittels eines oder mehrerer Aktuatoren, insbesondere Elektromotoren, ganz besonders Linearaktuatoren /-Motoren.. Eine Positionsbestimmung der vorzugsweise linearen Translativbewegung kann hierbei mittels schrittweise angesteuerten Schrittmotoren oder mittels geregelter Motoren und hiermit gekoppelten Linear-Messsystemen erfolgen.

Auch bei der zweiten genannten Bauform sind unterschiedliche Varianten möglich. So kann auch hier eine Basis mit zwei daran fest vorgesehenen Teiltragstrukturen vorgesehen sein, an denen ein Kontaktkörper ortsfest bzw. an denen der oder die Kontaktkörper mittels vorgesehener Führungsmittel geführt beweglich angebracht ist bzw. sind. Auch hier ist bei einer komplexeren Variante vorgesehen, dass die Kontaktkörper mitsamt gegebenenfalls vorgesehenen Führungsmitteln an einem oder jeweils einem Teil der Tragstruktur vorgesehen sind, welches seinerseits gegenüber einer gemeinsamen Basis oder hierzu ortfesten Abschnitten schlittenartig verfahrbar ist.

Im Falle der ersten genannten Bauform sind beidseitig des Aufnahmeraums Entfernungsmessgeräte vorgesehen, wobei dieses vorzugweise zur berührungslosen Entfernungsmessung ausgebildet sind. Die Entfernungsmessgeräte sind zur Zwischenspeicherung der erfassten Werte und/oder zur Weiterleitung der Werte an einen zentralen Auswertungsrechner oder eine Mehrzahl von gemeinsam agierenden Auswertungsrechnern ausgebildet. Die Datenweiterleitung kann kabelgebunden oder drahtlos erfolgen.

Insbesondere in Frage kommen hier Entfernungsmessgeräte, die zur Erfassung der Distanz in einer definierten Richtung ausgebildet sind. Solche insbesondere als Laserentfernungsmessgeräte ausgebildeten Entfernungsmessgeräte sind vergleichsweise preisgünstig und sehr genau. Zudem weisen sie eine geringe Masse auf, was bei der Verwendung an einem Drehflügler eine Rolle spielt, wie im Weiteren noch erläutert wird. Passende Laser-Entfernungsmessgeräte sind beispielsweise vom Hersteller Keyence verfügbar. Die bevorzugten Messprinzipien sind die Phasenlagemessung/Laserinterferometrie und die Lasertriangulation.

Alternativ zu einem Entfernungsmessgerät, welches in nur einer definierten Erfassungsrichtung eine Entfernung erfasst, kann je nach Art der Verwendung der Erfassungsvorrichtung auch die Verwendung von als Multipunkt-Entfernungsmessgeräten ausgebildeten Entfernungsmessgerät zweckmäßig sein. Hierunter werden Entfernungsmessgeräte verstanden, die gleichzeitig in einer Vielzahl von Richtungen eine Entfernungsmessung vornehmen. Hierdurch lässt sich ein Profil üblicherweise schneller untersuchen. Entsprechende Lidar-Sensoren sind beispielsweise vom Hersteller Leica verfügbar. Solche Sensoren können die Entfernung zu mehreren hundert oder sogar mehr als tausend Punkten gleichzeitig erfassen.

Allerdings sind die Kosten für diese Technologie und insbesondere die Anforderungen an die Auswertung der Ergebnisse erheblich höher, so dass vor dem Hintergrund der gegenwärtigen Rahmenparameter die oben beschriebenen einfachen Entfernungsmessgeräte mit nur einer Erfassungsrichtung bevorzugt werden.

Alternativ zur Anwendung von Entfernungsmessgeräte auf Laserbasis können auch genaue Radar-Entfernungsmessgeräte, die im GHz oderTHz-Frequenzbereich arbeiten, zum Einsatz kommen.

Die mindestens zwei Entfernungsmessgeräte sind beidseitig des Ausnahmeraums angeordnet und auf diesen gerichtet. Sie sind daher in etwa aufeinander zu ausgerichtet. Allerdings wird es als vorteilhaft angesehen, wenn die beiden Entfernungsmessgeräte zur Erfassung der Oberseite und der Unterseite gegeneinander angewinkelte Erfassungsrichtungen bzw. mittlere Erfassungsrichtungen aufweisen. Insbesondere bevorzugt wird eine Ausrichtung, bei der die Erfassungsrichtungen in einem Winkel zwischen einschließlich 90° und einschließlich 175° zueinander ausgerichtet sind, insbesondere vorzugsweise zwischen 150° und 175°, wobei 180° für die unmittelbar aufeinander gerichtete und somit nicht angewinkelte Ausrichtung steht. Die genannten Winkel gelten für Entfernungsmessgeräte, die eine gleichbleibende Anwinkelung zueinander haben. Grundsätzlich möglich ist jedoch auch eine Gestaltung, bei der die Entfernungsmessgeräte als solche verschwenkbar sind, insbesondere, wenn sie entlang einer nichtlinearen Teiltragstruktur verfahren.

Die gleichbleibende Anwinkelung der Erfassungsrichtungen bzw. der mittleren Erfassungsrichtungen in der beschriebenen Weise bietet den Vorteil, eine Kante des Profils des Rotorblattes, insbesondere die Vorderkante, präziser zu vermessen als es bei einer Ausrichtung von 180° möglich wäre. Insbesondere ergibt sich hierdurch, dass ein Flächenabschnitt an der besagten Kante von den Entfernungsmessgeräten beider Seiten erfasst werden kann. Somit steht ein überlappend erfasster Flächenabschnitt zur Verfügung. Dieser erleichtert es, die erfassten Punktpositionsdaten der Oberseite und der Unterseite in richtige Relativanordnung zueinander zu bringen und dann in einer gemeinsamen Datenstruktur abzulegen.

Bei der bereits genannten zweiten Bauform sind beiderseitig des Aufnahmeraums und des darin aufgenommenen Rotorblattes jeweils Kontaktkörper angeordnet, die jeweils eine in Richtung des Aufnahmeraums weisende Kontaktfläche aufweisen. Diese Kontaktkörper werden über die Oberseite bzw. Unterseite geführt, wobei sie permanent in Kontakt mit der jeweiligen Seite verbleiben. Die Bahn, die die Kontaktkörper beschreibt, erlaubt daher den Rückschluss auf die Formgebung der dabei berührten Seite des Rotorblattes.

Die Kontaktfläche der Kontaktkörper weist vorzugsweise die Form eines Kugeloberflächenabschnitts auf. Insbesondere kann eine Außenfläche des Kontaktkörpers mit besonderen reflektierenden Eigenschaften versehen sein, um durch ein beabstandetes Erfassungsgerät zuverlässig erfassbar zu sein. Ein solcher Reflexionskörper kann insbesondere durch ein Laserpositionserfassungsgerät erfassbar sein. Dies wird im Weiteren noch erläutert.

Die Kontaktkörper müssen relativ zueinander beweglich sein, um das Profil bei gleichzeitigem beidseitigem Anliegen erfassen zu können. Zu diesem Zweck ist vorzugsweise vorgesehen, dass beide Kontaktkörper jeweils mittels eines Führungsmittels wie einer Linearführung oder einer Schwenklagerung in Richtung des Aufnahmeraums und in entgegengesetzte Richtung verlagerbar sind. Denkbar, jedoch nicht bevorzugt, ist eine Gestaltung, bei der nur einer der Kontaktkörper über derartige Führungsmittel verfügt, während der andere ortsfest zu einer Basis der Erfassungsvorrichtung verbleibt.

Die mittels Führungsmitteln geführt beweglichen Kontaktkörper sind vorzugsweise mittels einer Federeinrichtung in Richtung des Aufnahmebereichs gedrückt, so dass sie bei Erfassung des Profils gegen die Kraft dieser Federeinrichtung ausgelenkt werden. Wenngleich es bevorzugt ist, dass die Kontaktkörper als Reflexionskörper ausgebildet sind und ihre Position von einem zur Erfassungsvorrichtung externen Positionserfassungsgerät erfasst wird, kann auch vorgesehen sein, dass durch Sensoren wie Drehmessgeber unmittelbar an der Erfassungsvorrichtung die Position der Kontaktkörper relativ zu einer gemeinsamen Basis der Erfassungsvorrichtung ermittelt wird. In einem solchen Fall stellt die Erfassungsvorrichtung eine Erfassungsvorrichtung erster und zweiter Bauform dar.

Die bis hier beschriebene Erfassungsvorrichtung erfindungsgemäßer Art stellt den Kern eines erfindungsgemäßen Erfassungssystems dar. Es verfügt über eine Basis, die gegenüber dem zu erfassenden Rotorblatt zum Zwecke der Erfassung als Ganzes bewegt wird oder gegenüber derer schlittenartig die Entfernungsmessgeräte oder die Kontaktkörper verfahrbar sind.

Ein erfindungsgemäßes Erfassungssystem weist neben einer solchen Erfassungsvorrichtung ein Bewegungssystem auf, welches zur Relativbewegung der Erfassungsvorrichtung als Ganzer gegenüber dem Rotorblatt vorgesehen ist.

Hierzu werden unterschiedliche Möglichkeiten für das Bewegungssystem vorgeschlagen.

Bei einer besonders bevorzugten Gestaltung ist das Bewegungssystem in Art eines unbemannten Fluggeräts in Art eines Drehflüglers ausgebildet. Insbesondere kann es sich dabei um einen Quadcopter mit vier Rotoren oder einen Hexacopter mit sechs Rotoren handeln. Auch höhere Zahlen von Rotoren können zweckmäßig sein. Dieses Fluggerät kann eine integrierte Steuereinrichtung für den autonomen Flug und die autonome Durchführung der nachfolgend beschriebenen Vorgehensweise ausgebildet sein. Das Fluggerät kann jedoch auch vom Boden über Funk gesteuert werden, entweder manuell oder automatisch. Das Fluggerät ist vorzugweise elektrisch betrieben und weist zu diesem Zweck Akkumulatoren zur Speicherung elektrischen Stroms auf. Grundsätzlich ist jedoch auch eine Stromversorgung mittels Kabel möglich. Weiterhin möglich ist die Nutzung eines Fluggeräts mit Verbrennungsmotor, insbesondere mit einem laufruhigen Wankelmotor.

Das Fluggerät weist in üblicher Weise vorzugsweise über ein System zur Positionsbestimmung, insbesondere mittels eines globalen Navigationssatellitensystems wie GPS, Navstar, Galileo, Beidou oder Glosnass. Insbesondere vorzugsweise ist das System zur Positionsbestimmung zur Auswertung von Signalen mehrerer Navigationssatellitensysteme eingerichtet, um eine entsprechend höhere Genauigkeit zu erlangen.

Zur Erreichung einer hohen Lagestabilität ist das Fluggerät insbesondere als Hexacopter ausgebildet. Denkbar ist es weiterhin, das Fluggerät mit einem zusätzlichen Antriebssystem und insbesondere mit einem zusätzlichen Rotor abseits der Hauptrotorenanordnung zu versehen, um den Windeinfluss zu minimieren. Insbesondere die durch die Erfassungsvorrichtung ggf. stark asymmetrische Masseverteilung des Fluggeräts kann es zweckmäßig erscheinen lassen, ein derartiges zusätzliches Antriebssystem zum Zwecke der Kompensation vorzusehen. Dieses zusätzliche Antriebssystem kann insbesondere auch an der Erfassungsvorrichtung angebracht sein und bevorzugt einen Propellerschutz aufweisen, wie dies bei Quadcoptern und anderen propellerbetriebenen Fluggeräten bekannt ist. Außerdem kann ein Antriebssystem, insbesondere derartiges Antriebssystem auch als Impeller-Triebwerk gestaltet sein, wobei dann dessen Mantel diesen Propellerschutz darstellt. Dadurch kann auch Gefahrlos bei stärkerem Wind eine Vermessung stattfinden.

Eine Erfassungsvorrichtung der oben beschriebenen Art ist am Fluggerät angebracht. Durch das Fluggerät kann die Erfassungsvorrichtung zum Rotorblatt geführt werden. Vorzugsweise handelt es sich um ein an einer Windkraftanlage montiertes Rotorblatt, beispielsweise in einer vertikal von der Nabe nach unten oder oben weisenden Drehstellung. Ebenso kann das Rotorblatt während der Messung horizontal ausgerichtet sein. Dies kann von Vorteil sein, da es gestattet, die Erfassungsvorrichtung unterhalb des Fluggeräts anzubringen. Dadurch kann die starke Exzentrizität in der Masseverteilung des Fluggeräts vermieden werden. Eine translative Bewegung der oben beschriebenen schlittenartigen Tragstruktur würde in diesem falle in vertikaler Richtung erfolgen.

Auch kann in der beschriebenen horizontalen Stellung des Rotorblattes dieses durch die Pitchverstellung in eine Nullposition ausgerichtet sein, so dass bei Wind keine bzw. geringe Auftriebskräfte wirken (Sturm-Position).

Die Erfassungsvorrichtung kann an dem Fluggerät als Ganzes schwenkbar und elektrisch verstellbar angebracht sein, um eine variable Ausrichtung einzunehmen. Hierdurch wird es möglich, mehrere Rotorblätter in voneinander abweichender Ausrichtung nacheinander zu erfassen, ohne dafür zwischendurch die Rotorstellung zu ändern. Der Motorantrieb kann hierbei als Rudermaschine ausgebildet sein.

Weiterhin kann das Fluggerät nach Erreichen des Rotorblattes die Erfassungsvorrichtung bei gleichzeitiger Erfassung des Profils als Ganzes gegenüber dem Rotorblatt verlagern. Alternativ jedoch nimmt das Fluggerät während der Erfassung eine weitgehend definierte Stellung ein und die Entfernungsmessgeräte bzw. die Kontaktkörper werden mittels der beschriebenen Schlitten gegenüber dem Rumpf des stationär verbleibenden Fluggeräts verlagert.

Vorzugsweise ist bei dem Erfassungsverfahren mittels eines Fluggeräts vorgesehen, dass das Fluggerät nacheinander unterschiedliche Höhen einnimmt und in jeder dieser Höhen eine Erfassung des Profils vornimmt.

Bei einer alternativen Gestaltung eines Erfassungssystems ist das Bewegungssystem mit einer Gondel ausgestattet sowie mit einem Hebesystem, insbesondere in Form eines Seilwindenhebesystems, mittels dessen die Gondel an der Windkraftanlage herabgelassen werden kann, um ein vertikal ausgerichtetes Rotorblatt zu untersuchen. Alternativ zum Seilwindenhebesystem können auch andere Hebesysteme vorgesehen sein, wie beispielsweise ein Turm-Klettersystem.

Die Erfassungsvorrichtung ist dabei fallweise oder fest an der Gondel angebracht und kann gemeinsam mit der Gondel entlang des Rotorblattes verlagert, also abgesenkt und angehoben, werden. Mittels der Gondel ist somit eine beliebige Position des Rotorblattes anfahrbar, um auf der jeweiligen Höhe die Erfassung des Profils mittels der Erfassungsvorrichtung vornehmen zu können. Die Erfassungsvorrichtung ist in diesem Falle vorzugsweise mit entlang zweier Teiltragvorrichtungen verfahrbarer Schlitten versehen, an denen die Kontaktkörper bzw. die Entfernungsmessgeräte vorgesehen sind.

Die Erfassungsvorrichtung kann an der Gondel insbesondere derart vorgesehen sein, dass die genannten Schlitten in Richtung der Drehachse des Rotors oder in hiergegen um 90° gedrehter Richtung verfahrbar sind. Eine Ausrichtung entsprechend der Drehachse des Rotors wird insbesondere für den Fall vorgeschlagen, dass die Rotorblätter für die Erfassung bestimmungsgemäß in eine Drehstellung mit einem Anstellwinkel von in etwa 0° gebracht werden. Eine hiergegen um 90° gedrehte Ausrichtung ist dafür vorgesehen, das Rotorblatt bei einem Anstellwinkel von 70° bis 110° aufzunehmen.

Eine dritte Möglichkeit zur Gestaltung des Bewegungssystems sieht vor, dass dieses als rollfähiges Verfahrsystem ausgebildet ist. Eine solche Gestaltung ist abweichend zu den vorangegangenen Gestaltungen insbesondere zur Erfassung eines Rotorblattes im demontierten oder noch nicht montierten Zustand vorgesehen. Insbesondere kann eine Rotorblatt zur Erfassung horizontal ausgerichtet sein, wobei es vorzugsweise ortsfest verbleibt, während die Erfassungsvorrichtung mittels des Verfahrsystem relativ zum Rotorblatt verlagert wird. Die Ausrichtung des Rotorblattes bei der Erfassung ist vorzugsweise derart, dass die Profilsehne des Rotorblattes in etwa vertikal ausgerichtet ist (+/- 20°).

Ein solches Bewegungssystem gemäß der dritten beschriebenen Möglichkeit ist insbesondere für eine herstellungsseitige Qualitätssicherung von Vorteil.

Die Erfassungsvorrichtung kann insbesondere vorzugsweise als Portaleinrichtung ausgebildet sein und über zwei voneinander beabstandete Fahrwerke verfügen, die mittels mindestens einer Portaltraverse miteinander verbunden sind. Die Traverse überspannt den Aufnahmebereich. Jedem Fahrwerk ist eine Säule zugeordnet, wobei diese Säulen insbesondere als zwei Teiltragstrukturen dient, entlang derer jeweils ein schlittenartiger Teil der Teiltragstrukturen mit Entfernungsmessgeräten verfahrbar ist und zwischen denen der Aufnahmebereich für das Rotorblatt vorgesehen ist.

Die Erfassungsvorrichtung kann mittels des Fahrwerks relativ zum Rotorblatt verfahren werden, so dass mit wenig Aufwand eine Vielzahl von Profilquerschnitten des Rotorblattes untersucht werden kann. Die Fahrwerke können passiv ausgebildet sein und eine Verlagerung durch eine von außen wirkende Kraft zulassen oder auch mit eigenem Antrieb versehen sein. Das Fahrwerk kann mit aktiv oder passiv lenkbaren Rollen ausgebildet sein. Grundsätzlich auch möglich ist es, das Fahrwerk als Schienenfahrwerk auszubilden, damit das Verfahrsystem entlang hallenbodenseitig angebrachter Schienen verlagerbar ist.

Die Erfassungsvorrichtung eines solchen Erfassungssystems mit rollfähigem Verfahrsystem ist vorzugsweise in der oben beschriebenen Weise mit einem Schlitten oder mehreren Schlitten versehen, an dem oder denen die Entfernungsmessgeräte bzw. die beweglich angebrachten Kontaktkörper vorgesehen sind. Der oder die Schlitten sind dabei vorzugsweise vertikal verfahrbar.

Wenn die beschriebene zweite Bauform einer Erfassungsvorrichtung mit Kontaktkörpern bei einem erfindungsgemäßen Erfassungssystem Verwendung findet, sind die Kontaktkörper vorzugweise als Reflexionskörper und insbesondere als zumindest teilsphärische Reflexionskörper ausgebildet, die durch ein Laserpositionserfassungsgerät besonders sicher erfassbar sind. In einem solchen Falle umfasst das Erfassungssystem vorzugsweise mindestens ein Laserpositionserfassungsgerät zur Erfassung des als Reflexionskörper ausgebildeten Kontaktkörpers. Diese Laserpositionserfassungsgeräte können als mobile Geräte ausgebildet sein, die zum Zwecke der Erfassung ortsfest positioniert werden, beispielsweise mittels eines Dreibeins. Die Laserpositionserfassungsgeräte können je nach Anwendungsfall jedoch auch fest installiert sein, beispielsweise in einer Halle, in der ein Erfassungssystem mit rollfähigem Verfahrsystem gemäß oben beschriebener Gestaltung Verwendung findet.

Zur Erfassung der zwei Reflexionskörper werden vorzugsweise zwei unterschiedliche Laserpositionserfassungsgeräte verwendet, so dass diese ideal auf die beiden Seiten des Rotorblattes ausgerichtet werden können. Bei Einrichtung des Systems wird üblicherweise zunächst die Relativanordnung der Laserpositionserfassungsgeräte zueinander ermittelt, um anschließend die Position der als Reflexionskörper ausgebildeten Kontaktkörper relativ zueinander anhand der ermittelten Daten berechnen zu können.

Geeignete Laserpositionserfassungsgeräte sowie Reflexionskörper sind beispielsweise vom Hersteller LEICA verfügbar.

Neben der Positionserfassung der als Reflexionskörper ausgebildeten Kontaktkörper einer erfindungsgemäßen Erfassungsvorrichtung kann ein derartiges Laserpositionserfassungsgerät bzw. eine Mehrzahl hiervon auch verwendet werden, um die Position des Bewegungssystems oder der Erfassungsvorrichtung des Erfassungssystems zu erfassen.

Hierfür ist vorgesehen, dass das Erfassungssystem mindestens einen Reflexionskörper aufweist, der an einer Basis der Erfassungsvorrichtung oder am Bewegungssystem angebracht ist. Zur Erfassung dieses Reflexionskörpers weist das Erfassungssystem mindestens ein Laserpositionserfassungsgerät auf. Vorzugsweise sind auch in diesem Fall zwei Reflexionskörper und zwei Laserpositionserfassungsgeräte vorgesehen.

Das Vorsehen eines oder mehrerer Reflexionskörper an einer Basis der Erfassungsvorrichtung oder am Bewegungssystem dient dem Zweck, dessen Position und/oder Ausrichtung gegenüber einem definierten Bezugssystem/Koordinatensystem zu erfassen. Die so erfassten Daten können dann insbesondere mit den Daten des Entfernungsmesssystems einer Erfassungsvorrichtung der ersten Bauform überlagert werden, so dass die Erfassung des Profils des Rotorblattes unabhängig von der Position des Bewegungssystems und gegebenenfalls hier eintretenden Störungen erfolgen kann, zum Beispiel langsame Bewegungen durch Windeinfluss.

Dies spielt insbesondere bei den beschriebenen Bewegungssystemen mit einem Fluggerät oder einer Gondel eine Rolle, da diese Bewegungssysteme in der Praxis nicht vollständig ortsfest verharren, sondern insbesondere durch Wind permanent in leichter Bewegung sind. Diese Bewegung kann durch die gleichzeitige Erfassung des Profils relativ zum Bewegungssystem und des Bewegungssystems relativ zum ortsfest aufgestellten Laserpositionserfassungsgerät ausgeglichen werden. Auch ist es denkbar, dass die Position des Bewegungssystems, insbesondere eines Fluggeräts als Bewegungssystem, auf Basis der erfassten Daten korrigiert wird, also beispielsweise derart, dass das Fluggerät anhand seiner erfassten Position seine Position unmittelbar korrigiert.

Die Daten, die im Falle der ersten Bauform einer erfindungsgemäßen Erfassungsvorrichtung durch die Entfernungsmessgeräte und vorzugsweise durch die Laserpositionserfassungsgeräte erfasst werden bzw. die Daten, die im Falle der zweiten Bauform vorzugsweise alleine durch Laserpositionserfassungsgeräte erfasst werden, werden weiterverarbeitet, um ein Abbild des Profils des Rotorblattes zu erstellen. Dieses Abbild besteht aus Punktpositionsdaten der Oberseite und der Unterseite des Profils, die in einem gemeinsamen Koordinatensystem verzeichnet sind. Wie bereits ausgeführt, werden dabei vorzugsweise Punktpositionsdaten zu einer Vielzahl von Profilen des Rotorblattes in unterschiedlichem Abstand zur Nabe ermittelt, so dass sich insgesamt ein 3D-Modell ergibt, welches insbesondere in Form von 3D-Daten für die CAD-Weiterverarbeitung vorliegen kann.

Die Zusammenführung der Daten unterschiedlicher Entfernungsmessgeräte und/oder der Positionserfassungsgeräte muss nicht unmittelbar bei Erfassung der Daten erfolgen. Stattdessen können die einzelnen Geräte ihre jeweils erfassten Daten auch zunächst separat und ggf. lokal speichern. Die Daten können dann zu einem späteren Zeitpunkt zusammengeführt werden, insbesondere auf Basis von Zeitstempeln, die während der separaten und ggf. lokalen Ablage der Daten gemeinsam mit den erfassten Daten abgespeichert werden.

Besonders bevorzugt ist eine unmittelbare Datenauswertung während der Datenerhebung. Hierdurch ist eine Prüfung der erfassten Daten möglich, um im Falle von fehlenden oder unplausiblen Daten eine Messung direkt wiederholen zu können.

Zum Anflug es Fluggeräts an das Rotorblatt kann ein herkömmliches Kamerasystem am Fluggerät, beispielsweise mit einer Auflösung von 4K, zur Anwendung kommen, um damit die Grobposition des Fluggeräts mit der Erfassungseinrichtung zu relativ zum Rotorblatt zu erfassen und zu regeln, und damit bei Bedarf notwendige Lageänderungen über das Lageregelungssystem des Fluggeräts auszuführen.

Des Weiteren kann ein zusätzliches berührungsloses hochauflösendes Kamera- und/oder Radarsystem an der Erfassungsvorrichtung oder am Bewegungssystem, insbesondere am Fluggerät, auch auf der Basis von Auswertung der hiermit erfassten Daten zusätzliche Informationen über den Zustand des Rotorblattes und daran vorhandene Auffälligkeiten wie Beschädigungen liefern. Insbesondere bei genauer Lokalisierbarkeit durch das beschriebene Laserpositions-Messsystem ist eine genaue Dokumentation des Zustands möglich. In Kombination mit dem Entfernungsmessgerät können vertiefende oder erhabene Beschädigungen des Rotorblattes frühzeitig sehr effektiv erkannt werden und ggf. unmittelbar bewertet werden.

Insbesondere ist es auch möglich, hier eine Markierung vorzusehen, insbesondere eine Laser-Markierung, beispielsweise die Fehlstelle umgebend, um anschließend die erforderlich Reparatur zu vereinfachen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt eine Windkraftanlage, deren Rotorblätter mittels der erfindungsgemäßen Vorrichtungen und dem erfindungsgemäßen Verfahren zu vermessen sind.
Fig. 2 und 2A bis 2D zeigen eine erste zur Erfassung des Profils eines Rotorblattes vorgesehene Erfassungsvorrichtu ng.
Fig. 3A bis 3C zeigen eine zweite zur Erfassung des Profils eines Rotorblattes vorgesehene Erfassungsvorrichtung.
Fig. 4A bis 4C zeigen eine dritte zur Erfassung des Profils eines Rotorblattes vorgesehene Erfassungsvorrichtung.
Fig. 5A bis 5C zeigen eine vierte zur Erfassung des Profils eines Rotorblattes vorgesehene Erfassungsvorrichtung.
Fig. 6A bis 6C zeigen eine fünfte zur Erfassung des Profils eines Rotorblattes vorgesehene Erfassungsvorrichtung.
Fig. 7 bis 9C zeigen ein erstes Erfassungssystem, welches über einen Quadcopter als Bewegungssystem verfügt.
Fig. 10 und 11 zeigen ein zweites Erfassungssystem, welches über eine Gondel als Teil eines Bewegungssystems verfügt, die mittels eines Seilwindensystems anhebbar und absenkbar ist.
Fig. 12 bis 13C zeigen ein drittes Erfassungssystem, welches über ein rollfähiges Verfahrsystem als Bewegungssystem verfügt.
Fig. 14 und 15 zeigen ein viertes Erfassungssystem, welches wie auch das erste Erfassungssystem, über einen Quadcopter als Bewegungssystem verfügt.

### DETAILLIERTE BESCHREIBUNG DER AUSFÜHRUNGSBEISPIELE

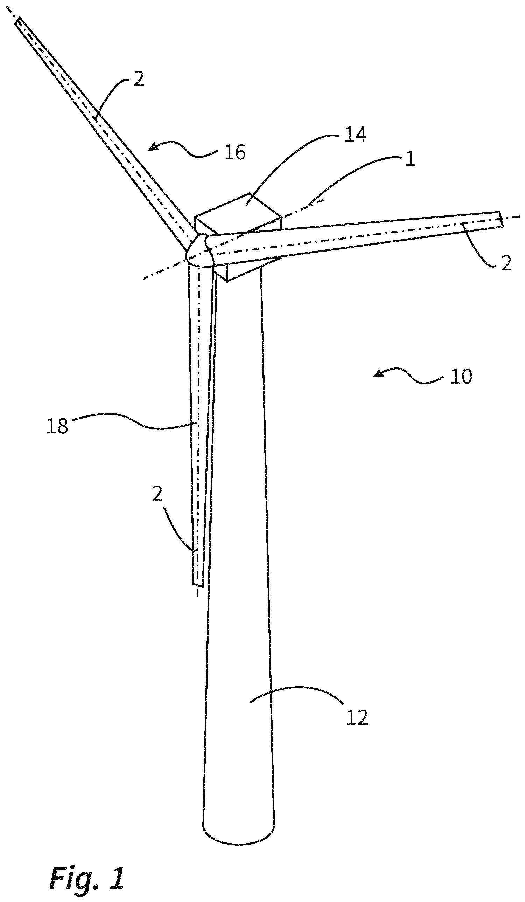

Fig. 1 zeigt eine Windkraftanlage 10. Diese verfügt über einen Turm 12, an dessen oberem Ende ein um die Hochachse drehbares Generatorgehäuse 14 vorgesehen ist. An dem hierin aufgenommenen Generator ist über eine um die Rotorachse 1 drehbare Rotorwelle der Rotor 16 angebracht, der bei der vorliegenden Gestaltung über drei sternförmig angeordnete Rotorblätter 18 verfügt. Die einzelnen Rotorblätter 18 können jeweils um eine Anstellachse 2 verschwenkt werden, um den Anstellwinkel des auf den Rotor wirkenden Windes zu steuern.

Der Gegenstand der erfindungsgemäßen Erfassungsvorrichtungen und Erfassungssysteme dient dem Zweck, die inhärente geometrische Gestaltung der Rotorblätter 18 und/oder ihre Ausrichtung gegenüber der Rotorachse 1 bzw. den anderen Rotorblättern 18 zu erfassen.

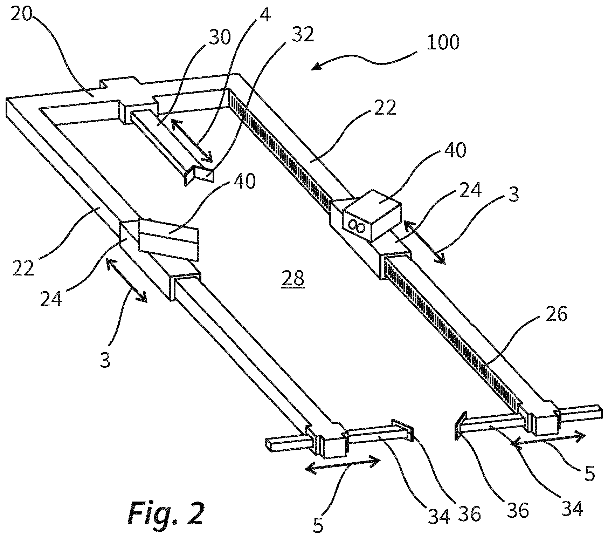

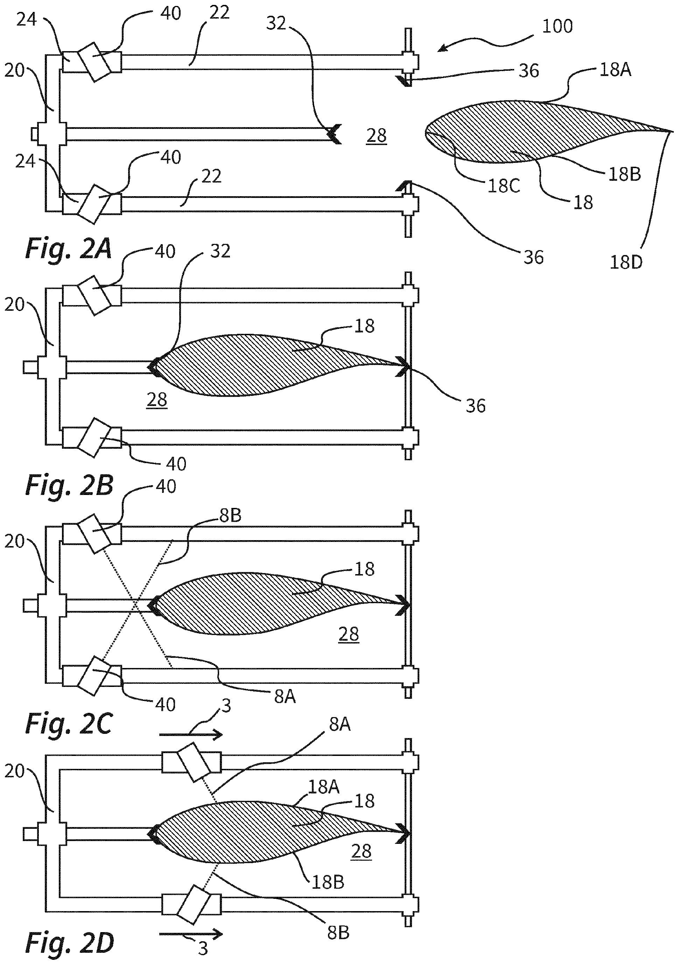

Fig. 2 zeigt eine erste hierfür vorgesehene Erfassungsvorrichtung 100. Diese Erfassungsvorrichtung 100 verfügt über eine Tragstruktur mit einer Basis 20 und zwei sich in der Perspektive der Fig. 2 nach vorne erstreckenden Auslegern 22, die mit der Basis 20 fest verbundene Teiltragstrukturen bilden und die zwischen sich einen Aufnahmebereich 28 definieren. An diesen Teiltragstrukturen 22 sind jeweils verfahrbare schlittenartige Teiltragstrukturen 24 vorgesehen, die in nicht näher dargestellter Art und Weise mit Elektromotoren versehen sind, um unter Nutzung einer an den Auslegern 22 vorgesehenen Verzahnungsstruktur 26 entlang der Pfeile 3 verfahrbar zu sein. Die beiden schlittenartigen Teiltragstrukturen 24 sind jeweils mit einem Entfernungsmessgerät 40 versehen, wobei es sich insbesondere um ein berührungsloses Entfernungsmessgerät handeln kann, welches mittels Lasertriangulation oder Laserinterferometrie in der Lage ist, den Abstand zu einem im Aufnahmebereich 28 angeordneten Gegenstand zu erfassen.

Die Erfassungsvorrichtung 100 verfügt darüber hinaus über einen Fixierungsmechanismus zur Fixierung eines Rotorblattes 18 im Aufnahmebereich 28. Zu diesem Fixierungsmechanismus gehört eine Haltestange 30 mit einer Anlagekontur 32, die in Richtung des Pfeils 4 verlagerbar ist, sowie zwei hierzu gegenüberliegend angeordnete Haltebacken 36, die mittels Backenstangen 34 entlang der Pfeile 5 gegenüber der Basis 20 bzw. den Auslegern 22 verlagerbar sind.

Die Funktionsweise der Erfassungsvorrichtung 100 der Fig. 2 wird anhand der Fig. 2A bis 2D erläutert.

Zunächst wird in der in Fig. 2A skizzierten Weise ein Rotorblatt 18 in den Aufnahmebereich eingeführt, wobei eine Vorderkante 18C durch die Anlagekontur 32 der Fixierungseinrichtung gehalten wird. Die gegenüberliegende hintere Kante 18D des Rotorblattes wird durch die Haltebacken 36 gehalten.

Fig. 2B zeigt den Zustand mit im Aufnahmebereich 28 der Erfassungsvorrichtung 100 aufgenommenem Rotorblatt 18. Ausgehend hiervon werden die Entfernungsmessgeräte 40 aktiviert und relativ zur Basis 20 in Richtung der Pfeile 3 gleichzeitig oder versetzt zueinander verfahren, wie insbesondere durch Fig. 2D verdeutlicht ist. Während dieser Verfahrbewegung wird mittels der Entfernungsmessgeräte 40 die Kontur der Oberseite 18A und der Unterseite 18B des Rotorblattes 18 erfasst.

Die Erfassungsrichtungen der einander gegenüberliegenden Entfernungsmessgerät 40 sind nicht parallel zueinander, sondern weichen im Ausführungsbeispiel etwa um 60° hiervon ab. Dies ist von Vorteil, um die besonders relevante Vorderkante 18C präzise vermessen zu können. Auch können die sich an der Vorderkante überlappenden Erfassungsbereiche der Messgeräte die Zusammenführung der Daten der Oberseite und der Unterseite erleichtern.

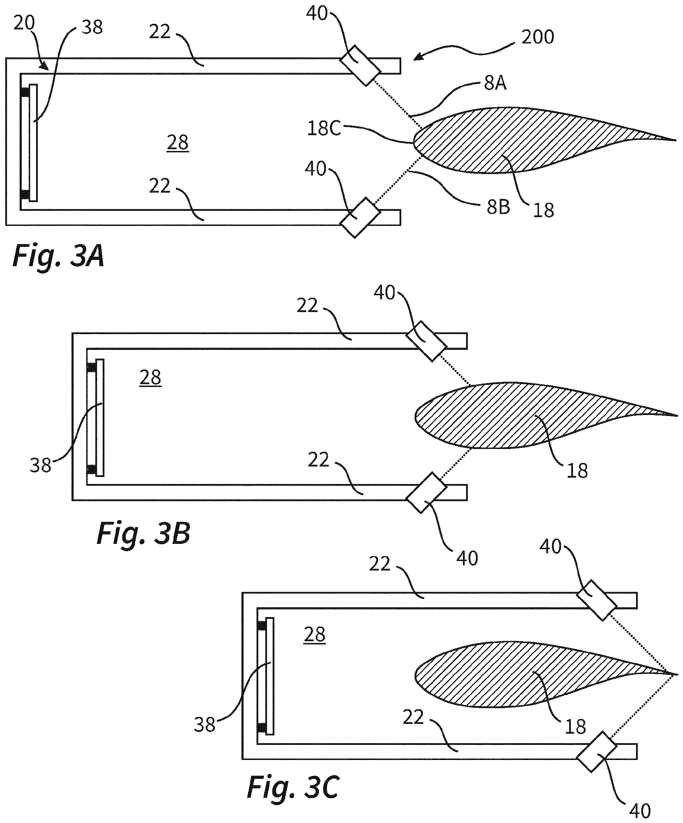

Die Fig. 3A bis 3C zeigen eine alternative Variante. Hier sind keine verfahrbaren Schlitten entsprechend der schlittenartigen Teiltragstrukturen 24 der Fig. 2 bis 2D vorgesehen. Stattdessen sind die Entfernungsmessgeräte 40 ortsfest an den als Ausleger ausgebildeten Teiltragstrukturen 22 der Tragstruktur vorgesehen. Der Aufnahmebereich 28 ist auf der linken Seite durch eine Prallplatte 38 begrenzt, so dass die Gefahr verringert wird, dass beim Aufschieben der Erfassungsvorrichtung 200 auf das Profil des Rotorblattes 18 dessen vordere Kante 18C verletzt wird.

Bei dieser Gestaltung der Fig. 3A bis 3B ist es die Verlagerung der Erfassungsvorrichtung 200 als Ganzes, die die Erfassung beider Seiten des Rotorblattes 18 gestattet. Entsprechend kann die Erfassungsvorrichtung 200 selbst vergleichsweise einfach ausgebildet sein.

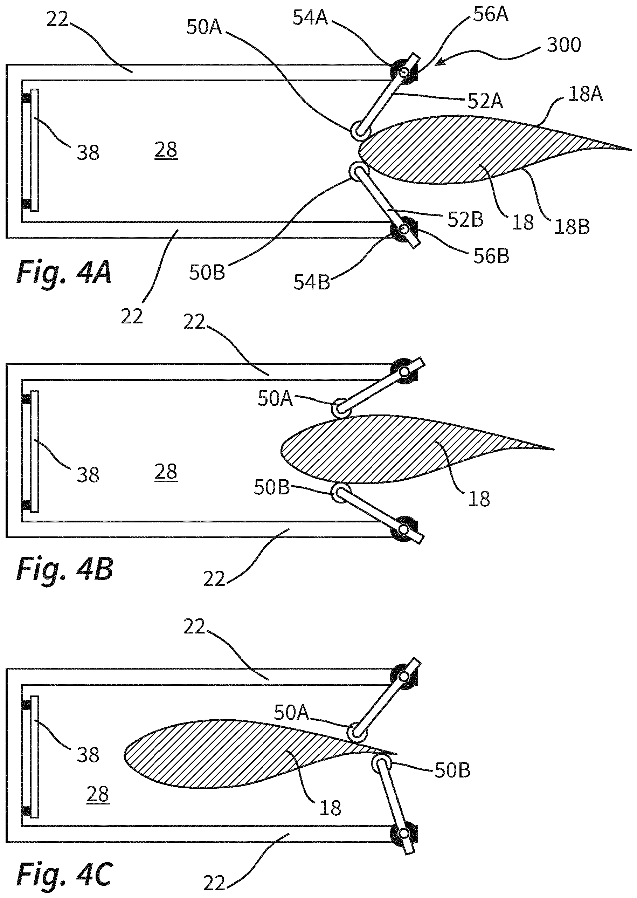

Bei der Gestaltung gemäß den Fig. 4A bis 4C ist ähnlich der Gestaltung der Fig. 3A bis 3C kein translativ verlagerbarer Schlitten oder dergleichen vorgesehen. Stattdessen ist hier vorgesehen, dass zwei Kontaktkörper 50A, 50B auf beiden Seiten des Rotorblattes 18 angeordnet sind. Diese beiden Kontaktkörper 50A, 50B sind jeweils am distalen Ende von Schwenkarmen 52A, 52B vorgesehen, die ihrerseits mittels einer Schwenklagerung 54A, 54B an den Auslegern 22 der Tragstruktur vorgesehen sind. Im Bereich der Schwenklagerungen 54A, 54B sind zusätzlich Federeinrichtungen 56A, 56B vorgesehen, durch die die Schwenkarme 52A, 52B in Richtung der Mitte des Aufnahmebereichs 28 kraftbeaufschlagt sind.

Wenn die Erfassungsvorrichtung 300 als Ganzes relativ zu dem Rotorblatt 18 verlagert wird, um dieses in den Aufnahmebereich 28 einzuführen, so gelangen die Kontaktkörper 50A, 50B beidseitig des Rotorblattes 18 in Kontakt mit dessen Oberseite 18A bzw. dessen Unterseite 18B und werden gegen die Kraft der Federeinrichtungen 56A, 56B ausgelenkt.

Die Fig. 4B und 4C verdeutlichen, wie bei fortgesetztem Einfahren des Rotorblattes 18 in den Aufnahmebereich 28 die Kontaktkörper 50A, 50B kontinuierlich Kontakt zur Oberseite 18A und Unterseite 18B bewahren.

Zur Erfassung der Kontur können im Bereich der Schwenklagerungen 54A, 54B nicht näher dargestellte Sensoren zur Erfassung des Schwenkwinkels vorgesehen sein. Dies ist jedoch nicht die bevorzugte Art der Ausgestaltung zur Erfassung der Position der Kontaktkörper, wie im Weiteren noch erläutert wird.

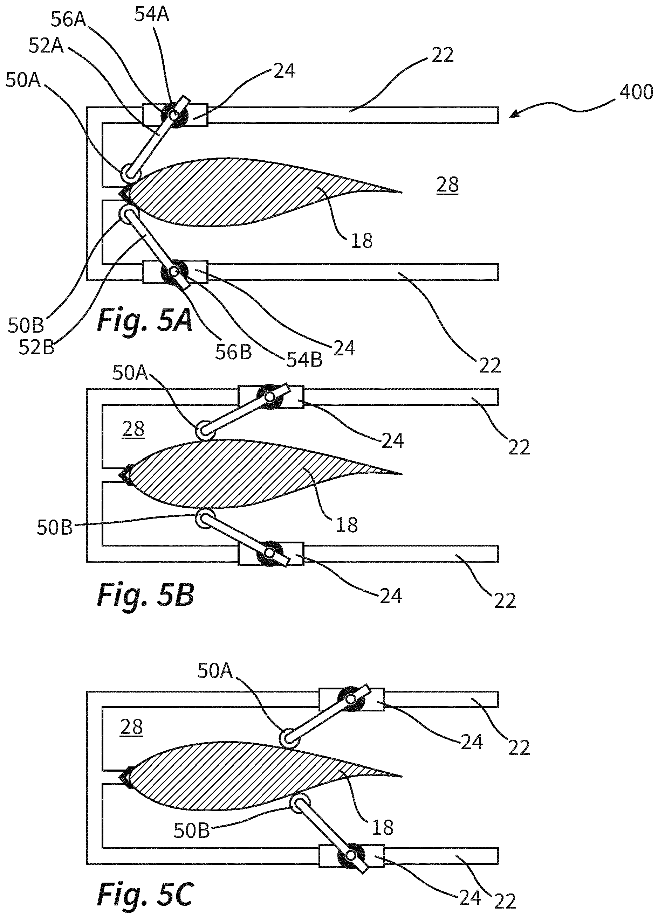

Bei der Variante gemäß den Fig. 5A bis 5C ist übereinstimmend mit der Variante der Fig. 4A bis 4C vorgesehen, dass Schwenkarme 52A, 52B mit am distalen Ende jeweils vorgesehenen Kontaktkörpern 50A, 50B vorgesehen sind. Diese Schwenkarme 52A, 52B sind jedoch in diesem Falle über ihre Schwenklagerungen 54A, 54B an linear in Richtung der Pfeile 3 verlagerbaren schlittenartigen Teiltragstrukturen 24 vorgesehen, die ähnlich der Gestaltung der Fig. 2 entlang der zueinander ortsfesten auslegerartigen Teiltragstrukturen 22 verlagerbar sind.

Demzufolge ist auch bei der Gestaltung der Fig. 5A bis 5C ähnlich der Gestaltung der Fig. 2 bis 2D vorgesehen, dass zunächst das Rotorblatt 18 in den Aufnahmebereich 28 eingeführt wird und erst anschließend eine Erfassung der Oberseite 18A und der Unterseite 18B erfolgt, indem die schlittenartigen Teiltragstrukturen 24 entlang der Pfeile 3 verlagert werden und hierbei die Kontaktkörper 50A, 50B in permanentem Kontakt über die Oberseite 18A und die Unterseite 18B führen.

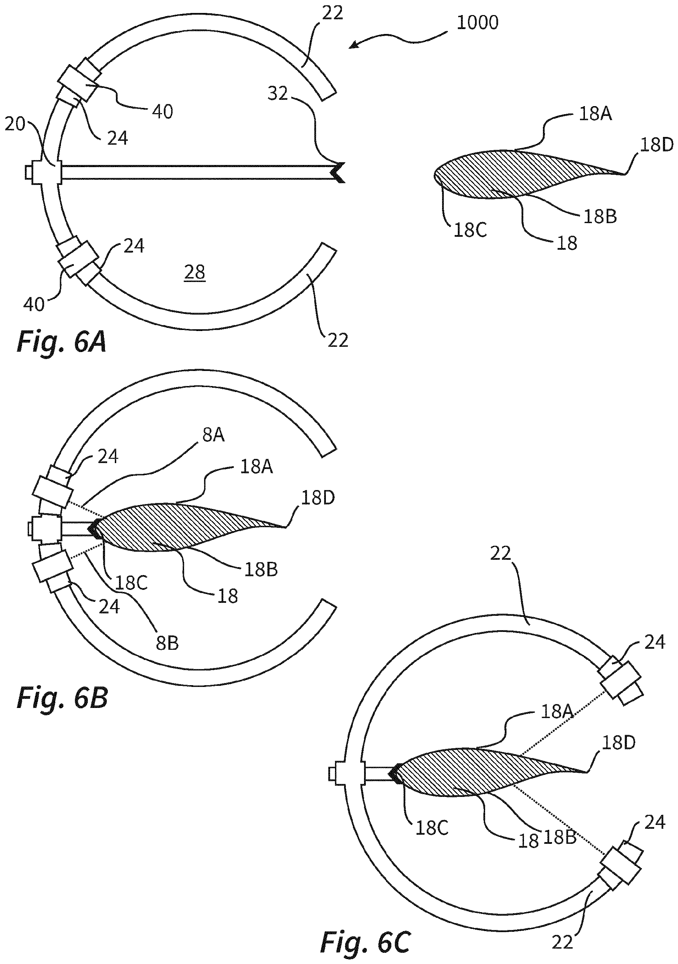

Eine weitere Gestaltung einer Erfassungsvorrichtung ergibt sich aus den Figuren 6A bis 6C. Die grundsätzliche Funktionsweise dieser Erfassungsvorrichtung 1000 entspricht jener der Fig. 2 bis 2D. Wesentlicher Unterschied dass die auslegerartigen Teiltragstrukturen 22 hier gekrümmt ausgebildet sind.

Korrespondierend dazu sind die verlagerbaren schlittenartigen Teiltragstrukturen 24 zur Führung an den gekrümmten Teiltragstrukturen 22 ausgebildet.

Dies führt in der durch die Figuren 6A bis 6C verdeutlichten Weise dazu, dass die schlittenartigen Teiltragstrukturen 24 bogenförmig verfahrbar sind, so dass die Messrichtungen 8A, 8B der auf den schlittenartigen Teiltragstrukturen 24 angebrachten Entfernungsmessgeräte 40 sich während der Bewegung entlang der als Schienen wirkenden Teiltragstrukturen 22 verändert. Hierdurch lassen sich in vorteilhafter Weise beide Seiten 18A, 18B des Rotorblattes 18 untersuchen.

Die beschriebenen Arten der Erfassungsvorrichtung werden vorzugsweise als Teil eines Erfassungssystems verwendet, welches darüber hinaus ein Bewegungssystem aufweist, mittels dessen die Erfassungsvorrichtung in den Bereich des Rotorblattes 18 gebracht werden kann und dann je nach Ausgestaltung als Ganzes zum Zwecke der Erfassung gegenüber dem Rotorblatt 18 bewegt wird. In den folgenden Beispielen ist die jeweilige Erfassungsvorrichtung nur exemplarisch gewählt. Jede der in den Figuren 2 bis 6C dargestellten Grundformen von Erfassungsvorrichtungen könnte hier stattdessen Verwendung finden.

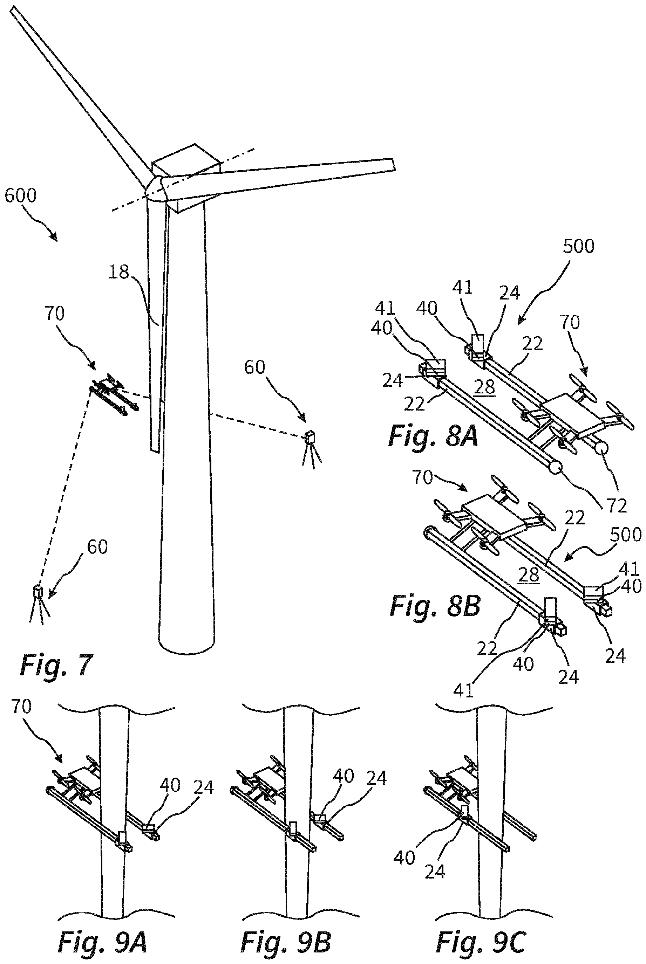

Die Fig. 7 bis 9C zeigen eine erste Variante eines Erfassungssystems. Dieses Erfassungssystem 600 verfügt über ein Fluggerät 70 in Art eines Quadcopters. Wie die Fig. 8A und 8B verdeutlichen, die das Fluggerät 70 von der Rückseite und der Vorderseite zeigen, ist an dem Fluggerät 70 eine Erfassungsvorrichtung 500 vorgesehen, die im Wesentlichen jener Erfassungsvorrichtung 100 der Fig. 2 bis 2D entspricht. Diese verfügt über zwei starr am Fluggerät angebrachte schienenartige Teiltragstrukturen 22, an denen schlittenartig verlagerbare Teiltragstrukturen 24 vorgesehen sind, die ihrerseits Träger von Entfernungsmessgeräten 40 sind. Am rückwärtigen Ende der starren Teiltragstrukturen 22 sind Reflexionskörper 72 vorgesehen.

Wie Fig. 7 verdeutlicht, kann das Fluggerät 70 im Flug durch zwei Laserpositionserfassungsgeräte 60 verfolgt werden, die jeweils einen der Reflexionskörper 72 erfassen und dadurch gemeinsam die genaue Lage des Fluggeräts 70 erfassen können. Auf diese Art und Weise ist es möglich, das Fluggerät 70 in der durch Fig. 9A verdeutlichten Art bis an das Rotorblatt 18 heranzufliegen und das Rotorblatt 18 in dem durch die starren Teiltragstrukturen 22 definierten Aufnahmebereich 28 aufzunehmen. Ist dies geschehen, so werden die schlittenartigen Teiltragstrukturen 24 parallel zueinander verlagert und erfassen dabei die Kontur des Rotorblattes 18.

Anschließend können in nicht näher dargestellter Weise die von den Laserpositionserfassungsgeräten 60 erfassten Positionsdaten zum Fluggerät 70 als Ganzem sowie die durch die Entfernungsmessgeräte 40 erfassten Konturen der Oberseite 18A und der Unterseite 18B des Rotorblattes 18 verwendet werden, um in überlagerter Weise ein präzises Abbild des Querschnitts des Rotorblattes 18 zu erzeugen. Die hierdurch erfassbare Datenstruktur verfügt über Punktpositionsdaten zur Oberseite 18A und zur Unterseite 18B des Rotorblattes 18 und eignet sich daher sehr gut als Grundlage beispielsweise zur Anpassung von Anbauelementen an das konkret vermessene Rotorblatt 18.

Wie aus den Figuren 8A und 8B ersichtlich ist, weist das Fluggerät auf den Entfernungsmessgeräten 40 zusätzliche Einheiten 41 auf. Diese verfügen über eine Kamera zur Erfassung oder Dokumentation von Störstellen. Auch können die Einheiten 41 Markierungslaser aufweisen, die eine erkannte Störstelle markieren, beispielsweise umrahmen, können.

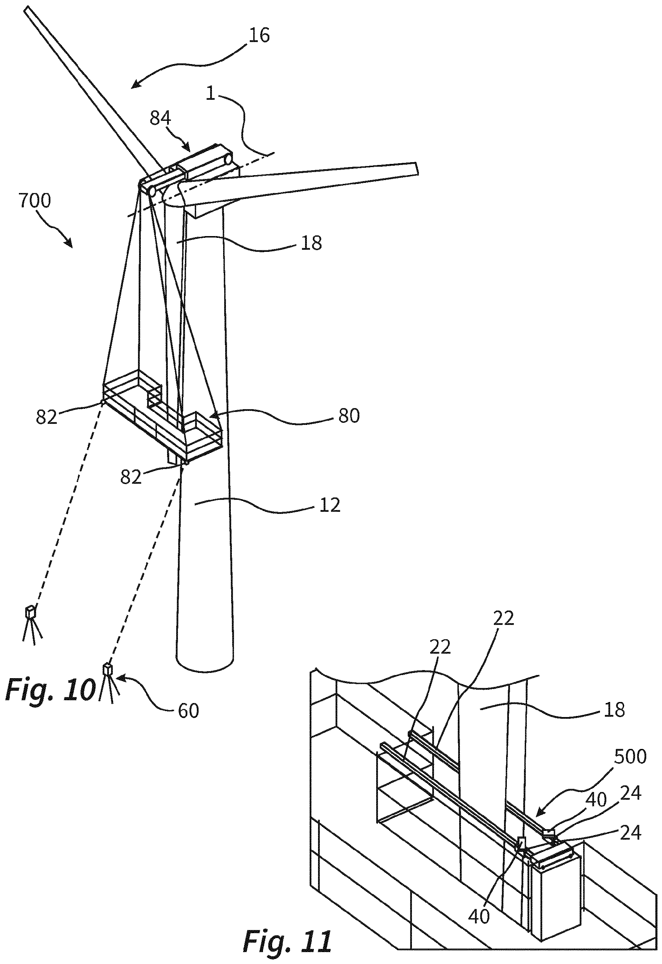

Bei der Gestaltung des Erfassungssystems 700 gemäß der Fig. 10 und 11 ist eine Gondel 80 vorgesehen, die über ein Seilwindensystem 84 entlang des Turms 12 der Windkraftanlage 10 verfahrbar ist. Dabei wird in ähnlicher Art und Weise wie beim vorangegangenen Ausführungsbeispiel mittels Laserpositionserfassungsgeräten 60 und hierzu korrespondierenden Reflexionskörpern 82 an der Gondel 80 deren exakte Information erfasst. An der Gondel 80 selbst befindet sich eine Erfassungsvorrichtung 500, die entsprechend der Erfassungsvorrichtung 500 des vorgenannten Ausführungsbeispiels über zwei während des Erfassungsvorgangs zur Gondel 80 ortsfeste Teiltragstrukturen 22 verfügt, entlang derer schlittenartige Teiltragstrukturen 24 mit daran angebrachten Entfernungsmessgeräten 40 verfahrbar sind. Ebenso wie durch die Fig. 9A bis 9C verdeutlicht, kann das Profil des Rotorblattes 18 durch Verlagerung dieser schlittenartigen Teiltragstrukturen 22 beidseitig simultan erfasst werden.

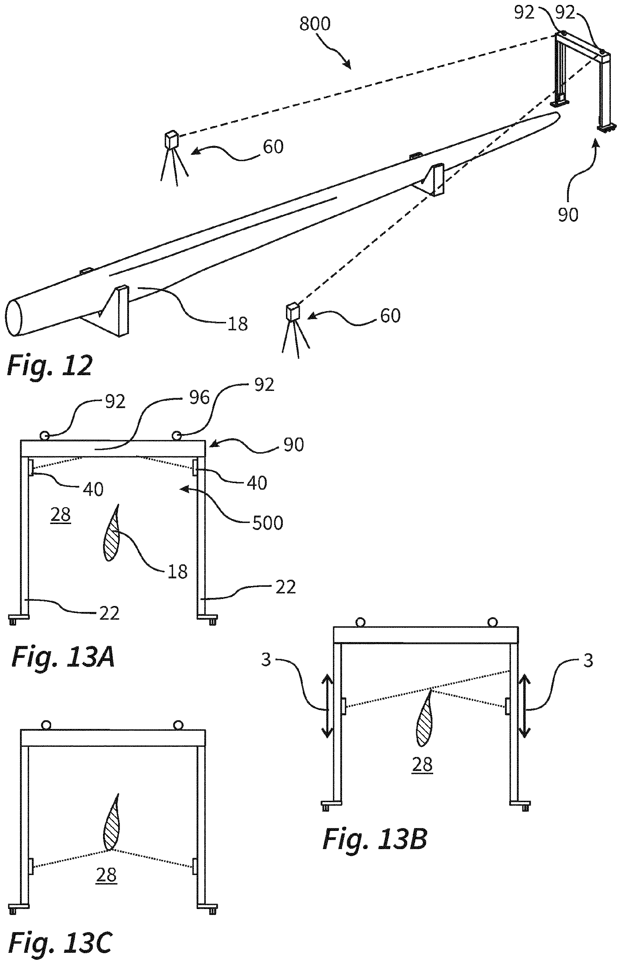

Bei der Gestaltung gemäß der Fig. 12 bis 13B ist abweichend von den vorangegangen Erfassungssystemen vorgesehen, dass das dortige Erfassungssystem 800 zur Vermessung eines Rotorblattes 18 im nicht montierten Zustand vorgesehen ist. Das Erfassungssystem 800 verfügt über ein rollfähiges Verfahrsystem 90 in Art einer Portaleinrichtung, welches über zwei Säulen 22 verfügt, die über eine Traverse 96 miteinander verbunden sind. Am unteren Enden der Säulen 22 ist ein Fahrwerk 94 vorgesehen, mittels dessen das Verfahrsystem 90 relativ zum Rotorblatt 18 bewegt werden kann. Ebenso wie bei den beiden vorangegangenen Ausführungsbeispielen sind zwei Laserpositionserfassungsgeräte 60 vorgesehen, die im Zusammenspiel mit Reflexionskörpern 92 des Verfahrsystems 90 dessen genaue Lokalisierung zu lassen.

Das Verfahrsystem 90 dient als Träger für eine Erfassungsvorrichtung zur Erfassung des Profils des Rotorblattes 18. Hierfür sind zwei vertikal verfahrbare Entfernungsmessgeräte 40 an der Innenseite der Teiltragstrukturen bildenden Säulen 22 vorgesehen, die in einen Aufnahmebereich 28 unterhalb der Traverse 96 gerichtet sind und in Richtung der Pfeile 3 vertikal verfahrbar sind. Nachdem das Verfahrsystem 90 an der zu untersuchenden Stelle des Rotorblattes 18 positioniert wurde, kann dann in der durch die Fig. 13A bis 13C verdeutlichten Weise gleichzeitig die Kontur der Oberseite und der Unterseite des Rotorblattes 18 erfasst werden.

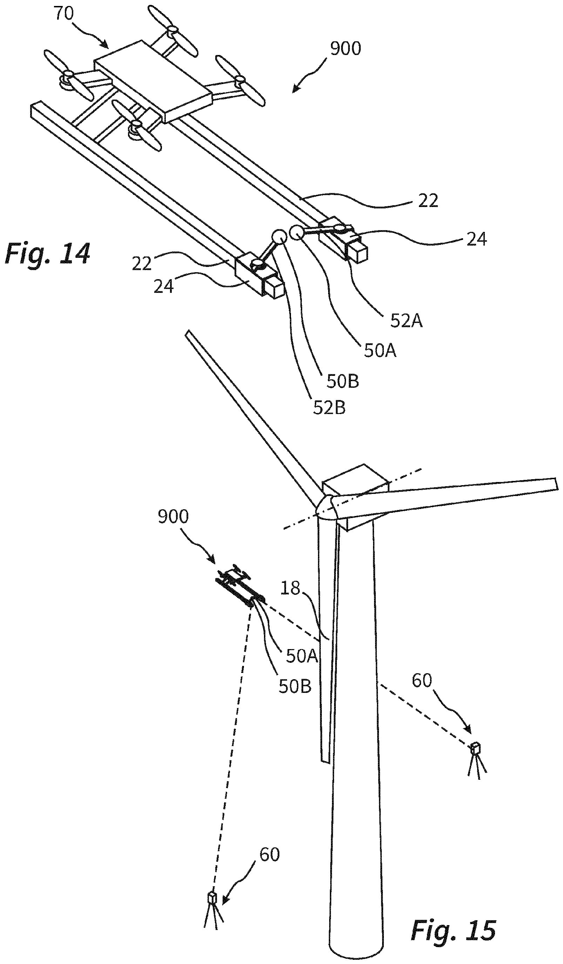

Bei der Gestaltung eines Erfassungssystems 900 entsprechend der Fig. 14 und 15 ist das Bewegungssystem 70 wiederum in Art eines Quadcopters gestaltet. Allerdings ist hier die Erfassungsvorrichtung ähnlich der Gestaltung der Fig. 4A bis 5C mit auslenkbaren Kontaktkörpers 50A, 50B ausgebildet, die gleichzeitig Reflexionskörper darstellen.

Wenn der Quadcopter die Erfassungsvorrichtung an das Rotorblatt (18) heranführt, werden die Kontaktkörpers 50A, 50B hierdurch ausgelenkt, bleiben jedoch in Kontakt mit dem Rotorblatt. Ihre Position wird unmittelbar durch Laserpositionserfassungsgeräte 60 erfasst, so dass sich hieraus die Profilform ableiten lässt. Da der Quadcopter und dessen Position jenseits der Kontaktkörper keine große Relevanz für die Messung hat, muss seine Position nicht erfasst werden. Auch wenn der Quadcopter aufgrund von Windeinfluss nicht ruhig in der Luft stehen kann, beeinflusst dies die Erfassung der Profilform nicht oder kaum.

Die Teiltragstrukturen 24 können verschlieblich oder als fester Teil der den Aufnahmeraum beidseitig fest am Rumpf des Quadcopters vorgesehenen Teiltragstrukturen 22 ausgebildet sein.

## Patentansprüche

1. Erfassungsvorrichtung (100, 200, 300, 400, 500, 1000) zur Erfassung der Formgebung und/oder Ausrichtung von Rotorblättern (18) von Windkraftanlagen (10) mit dem folgenden Merkmal:
a. die Erfassungsvorrichtung (100, 200, 300, 400, 500, 1000) ist dafür ausgebildet, eine Oberseite (18A) und eine Unterseite (18B) des Rotorblattes (18) gleichzeitig zu erfassen,
**dadurch gekennzeichnet dass**
die Erfassungsvorrichtung eine Tragstruktur (20, 22, 24) aufweist, die über zwei Teiltragstrukturen (22, 24) verfügt, zwischen denen ein Aufnahmebereich (28) für das Rotorblatt (18) vorgesehen ist, und an den beiden Teiltragstrukturen (22, 24) in Richtung des Aufnahmebereichs (28) gerichtete Entfernungsmessgeräte (40) zur gleichzeitigen Erfassung einer Oberseite (18A) und einer Unterseite (18B) des Rotorblattes (18) vorgesehen sind,
und dass die Entfernungsmessgeräte (40) als berührungsloses Laserentfernungsmessgeräte (40) ausgebildet sind.

2. Erfassungsvorrichtung (100, 400, 500, 1000) nach Anspruch 1 mit den folgenden weiteren Merkmalen:
a. die Tragstruktur (20, 22, 24) weist eine gemeinsame Basis (20) auf, und
b. die Teiltragstrukturen (24), an denen die Entfernungsmessgeräte (40) vorgesehen sind, sind gemeinsam oder getrennt gegenüber der Basis (20) verlagerbar, insbesondere linear verlagerbar.

3. Erfassungsvorrichtung (100, 200, 500, 1000) nach einem der Ansprüche 1 bis 2 mit den folgenden weiteren Merkmalen:
a. die Entfernungsmessgeräte (40) sind als Multipunkt-Entfernungsmessgeräte ausgebildet, die für eine Mehrzahl von Richtungen gleichzeitig die Entfernung zum Rotorblatt erfassen können.

4. Erfassungsvorrichtung (100, 200, 500) nach einem der Ansprüche 1 bis 3 mit den folgenden weiteren Merkmalen:
a. die Entfernungsmessgeräte (40) zur Erfassung der Oberseite (18A) und der Unterseite (18B) weisen gegeneinander angewinkelte Hauptmessrichtungen (8A, 8B) auf, wobei die Hauptmessrichtungen (8A, 8B) vorzugsweise in einem Winkel zwischen 90° und 175° gegeneinander angewinkelt sind, insbesondere vorzugweise in einem Winkel zwischen 150° und 175°.

5. Erfassungsvorrichtung (300, 400) nach einem der Ansprüche 1 bis 4 mit den folgenden weiteren Merkmalen:
a. die Erfassungsvorrichtung (100, 400) weist einen Fixierungsmechanismus zur Fixierung des Rotorblattes im Aufnahmebereich (28) auf.

6. Erfassungsvorrichtung (300, 400) nach Anspruch 5, wobei der Fixierungsmechanismus eine Anlagekontur (32) und/oder zwei der Anlagekontur (32) gegenüberliegend angeordnete Haltebacken (36) aufweist.

7. Erfassungsvorrichtung (300, 400) nach Anspruch 6, wobei die Anlagekontur (32) an einer verlagerbaren Haltestange (30) angeordnet ist und/oder die Haltebacken (36) mittels Backenstangen (24) gegenüber der Tragstruktur (20, 22) verlagerbar sind.

8. Erfassungssystem (600, 700, 800, 900) zur Erfassung der Formgebung und/oder Ausrichtung von Rotorblättern (18) von Windkraftanlagen (10) mit den folgenden Merkmalen:
a. das Erfassungssystem (600, 700, 800, 900) verfügt über eine Erfassungsvorrichtung (100, 200, 300, 400, 500, 1000) nach einem der Ansprüche 1 bis 7 zur Erfassung eines Rotorblattes (18), und
b. das Erfassungssystem (600, 700, 800, 900) weist ein Bewegungssystem (70, 80, 84, 90) zur Relativbewegung der Erfassungsvorrichtung (100, 200, 300, 400, 500, 1000) gegenüber dem Rotorblatt (18) auf.

9. Erfassungssystem (600) nach Anspruch 8 mit den folgenden Merkmalen:
a. das Bewegungssystem ist als unbemanntes Fluggerät (70) in Art eines Drehflüglers ausgebildet, und
b. die Erfassungsvorrichtung (500) ist am Fluggerät (70) angebracht und kann mittels dessen zum zu erfassenden Rotorblatt (18) gebracht werden.

10. Erfassungssystem (700) nach Anspruch 8 mit den folgenden Merkmalen:
a. das Bewegungssystem umfasst eine Gondel (80) und ein Hebesystem (84), mittels dessen die Gondel (80) an einer Windkraftanlage (10) abgesenkt und angehoben werden kann, und
b. die Erfassungsvorrichtung (500) ist an der Gondel (80) angebracht und kann mittels dieser entlang des Rotorblattes (18) verlagert werden.

11. Erfassungssystem (800) nach Anspruch 8 mit dem folgenden Merkmal:
a. das Bewegungssystem ist als rollfähiges Verfahrsystem (90) ausgebildet, mittels dessen die Erfassungsvorrichtung (500) verfahrbar ist, vorzugsweise mit dem folgenden zusätzlichen Merkmal:
b. das Erfassungssystem (800) ist als Portaleinrichtung ausgebildet, die über zwei voneinander beabstandete Fahrwerke (94) verfügt, die mittels einer Portaltraverse (96) miteinander verbunden sind, wobei der Aufnahmebereich (28) zur Aufnahme des Rotorblattes (18) unterhalb der Portaltraverse (96) vorgesehen ist.

12. Erfassungssystem (600, 700, 800) nach einem der Ansprüche 8 bis 11 mit den folgenden Merkmalen:
a. das Erfassungssystem (600, 700, 800) weist mindestens einen Reflexionskörper (72, 82, 92) auf, der an einer Basis der Erfassungsvorrichtung oder am Bewegungssystem (70, 80, 90) angebracht ist, und
b. das Erfassungssystem (600, 700, 800) weist mindestens ein Laserpositionserfassungsgerät (60) zur Erfassung des mindestens einen Reflexionskörpers (72, 82, 92) auf, vorzugsweise mit dem folgenden zusätzlichen Merkmal:
c. das Erfassungssystem (600, 700, 800) weist mindestens zwei Reflexionskörper (72, 82, 92) auf, die voneinander beabstandet an einer Basis der Basis der Erfassungsvorrichtung oder am Bewegungssystem angebracht sind, wobei das Erfassungssystem 600, 700, 800) mindestens zwei Laserpositionserfassungsgeräte (60) zur Erfassung der mindestens zwei Reflexionskörper (72, 82, 92) aufweist.

13. Verfahren zur Erfassung der Formgebung und/oder Ausrichtung von Rotorblättern (18) von Windkraftanlagen (10) mit den folgenden Merkmalen:
a. das Verfahren dient dem Zweck eine Oberseite (18A) und eine Unterseite (18B) eines Profils eines Rotorblattes (18) einer Windkraftanlage (10) zumindest abschnittsweise zu vermessen, und
b. das Verfahren findet unter Verwendung einer Erfassungsvorrichtung (100, 200, 300, 400, 500, 1000) statt, welche zwei als berührungslose Laserentfernungsmessgeräte (40) ausgebildete Entfernungsmessgeräte (40) aufweist, von denen eines der Oberseite (18A) und eines der Unterseite (18B) zugeordnet ist, und
c. die beiden Entfernungsmessgeräte (40) werden in Richtung einer Profilsehne des Profils des Rotorblattes (18) relativ zu diesem verlagert, so dass Punktpositionsdaten der Oberseite (18A) und der Unterseite (18B) erfasst werden können, wobei dieser Erfassung vorzugweise simultan erfolgt, und
d. die Punktpositionsdaten der Oberseite (18A) und der Unterseite (18B) werden in einer Datenstruktur zusammengefügt, die die Punktpositionsdaten der Oberseite (18A) und der Unterseite (18B) in korrekter Relativanordnung zueinander umfasst.

## Claims

1. Detection device (100, 200, 300, 400, 500, 1000) for detecting the shape and/or orientation of rotor blades (18) of wind turbines (10) having the following feature:
a. the detection device (100, 200,300,400, 500, 1000) is configured to detect an upper side (18A) and a lower side (18B) of the rotor blade (18) at the same time,
**characterised in that**
the detection device has a support structure (20, 22, 24) which has two partial support structures (22, 24) between which a receiving area (28) is provided for the rotor blade (18), and on the two partial support structures (22, 24) distance measuring devices (40) directed towards the receiving area (28) are provided for the simultaneous detection of an upper side (18A) and a lower side (18B) of the rotor blade (18),
and **in that** the distance measuring devices (40) are configured as non-contact laser distance measuring devices (40).

2. Detection device (100, 400, 500, 1000) according to claim 1 having the following further features:
a. the support structure (20, 22, 24) has a common base (20), and
b. the partial support structures (24), on which the distance measuring devices (40) are provided, can be displaced jointly or separately with respect to the base (20), in particular can be displaced linearly.

3. Detection device (100, 200, 500, 1000) according to any of claims 1 to 2 having the following further features:
a. the distance measuring devices (40) are configured as multipoint-distance measuring devices, which can detect the distance from the rotor blade simultaneously for a plurality of directions.

4. Detection device (100, 200, 500) according to any of claims 1 to 3 having the following further features:
a. the distance measuring devices (40) for detecting the upper side (18A) and the lower side (18B) have mutually angled main measuring directions (8A, 8B), wherein the main measuring directions (8A, 8B) are preferably at an angle of between 90° and 175° to one another, in particular preferably at an angle of between 150° and 175°.

5. Detection device (300, 400) according to any of claims 1 to 4 having the following further features:
a. the detection device (100, 400) has a fixing mechanism for fixing the rotor blade in the receiving area (28).

6. Detection device (300, 400) according to claim 5, wherein the fixing mechanism has a contact contour (32) and/or two holding jaws (36) arranged opposite the contact contour (32).

7. Detection device (300, 400) according to claim 6, wherein the contact contour (32) is arranged on a displaceable holding rod (30) and/or the holding jaws (36) are displaceable relative to the support structure (20, 22) by means of jaw rods (24).

8. Detection system (600, 700, 800, 900) for detecting the shape and/or orientation of rotor blades (18) of wind turbines (10) having the following features:
a. the detection system (600, 700, 800, 900) has a detection device (100, 200, 300, 400, 500, 1000) according to any of claims 1 to 7 for detecting a rotor blade (18), and
b. the detection system (600, 700, 800, 900) has a movement system (70, 80, 84, 90) for moving the detection device (100, 200, 300, 400, 500, 1000) relative to the rotor blade (18).

9. Detection system (600) according to claim 8 having the following features:
a. the motion system is an unmanned aircraft (70) in the form of a rotary wing aircraft, and
b. the detection device (500) is attached to the aircraft (70) and can be brought up to the rotor blade (18) to be detected by means thereof.

10. Detection system (700) according to claim 8 having the following features:
a. the motion system comprises a nacelle (80) and a lifting system (84), by means of which the nacelle (80) on a wind turbine (10) can be lowered and lifted and
b. the detection device (500) is mounted on the nacelle (80) and can be displaced by means of the latter along the rotor blade (18).

11. Detection system (800) according to claim 8 having the following feature:
a. the motion system is configured as a rolling traversing system (90) by means of which the detection device (500) can be moved, preferably having the following additional feature:
b. the detection system (800) is configured as a gantry device which has two spaced-apart undercarriages (94) which are connected to one another by means of a gantry cross-member (96), wherein the receiving area (28) for receiving the rotor blade (18) is provided underneath the gantry cross-member (96).

12. Detection system (600, 700, 800) according to any of claims 8 to 11 having the following features:
a. the detection system (600, 700, 800) has at least one reflective body (72, 82, 92), which is arranged on a base of the detection device or on the motion system (70, 80, 90), and
b. the detection system (600, 700, 800) has at least one laser position detection device (60) for detecting the at least one reflective body (72, 82, 92), preferably having the following additional feature:
c. the detection system (600, 700, 800) has at least two reflective bodies (72, 82, 92), which are spaced apart from one another on a base of the base of the detection device or attached to the motion system, wherein the detection system (600, 700, 800) has at least two laser position detecting devices (60) for detecting the at least two reflective bodies (72, 82, 92).

13. Method for detecting the shape and/or orientation of rotor blades (18) of wind turbines (10) having the following features:
a. the method is used for the purpose of measuring an upper side (18A) and a lower side (18B) of a profile of a rotor blade (18) of a wind turbine (10) at least in sections, and
b. the method takes place by using a detection device (100, 200, 300, 400, 500, 1000) which has two distance measuring systems (40, 50A, 50B) configured as non-contact laser distance measuring devices (40), one of which is assigned to the upper side (18A) and one of which is assigned to the lower side (18B) and
c. the two distance measuring devices (40) are displaced in the direction of a chord of the profile of the rotor blade (18) relative thereto, so that point position data of the upper side (18A) and the lower side (18B) can be detected, wherein this detection is preferably performed simultaneously, and
d. the point position data of the upper side (18A) and the lower side (18B) are merged together in a data structure which comprises the point position data of the upper side (18A) and the lower side (18B) in correct relative arrangement to one another.

## Revendications

1. Dispositif de détection (100, 200, 300, 400, 500, 1000) pour détecter le façonnage et/ou l'orientation de pales de rotor (18) d'éoliennes (10) présentant la caractéristique suivante :
a. le dispositif de détection (100, 200, 300, 400, 500, 1000) est conçu pour détecter simultanément une face supérieure (18A) et une face inférieure (18B) de la pale de rotor (18), **caractérisé en ce que** le dispositif de détection présente une structure porteuse (20, 22, 24) qui dispose de deux structures porteuses partielles (22, 24), entre lesquelles est prévue une zone de réception (28) pour la pale de rotor (18), et des instruments de mesure de la distance (40) orientés en direction de la zone de réception (28) sont prévus sur les deux structures porteuses partielles (22, 24) pour détecter simultanément une face supérieure (18A) et une face inférieure (18B) de la pale de rotor (18), et **en ce que** les instruments de mesure de la distance (40) sont conçus comme des instruments de mesure de la distance au laser (40) sans contact.

2. Dispositif de détection (100, 400, 500, 1000) selon la revendication 1 présentant les caractéristiques supplémentaires suivantes :
a. la structure porteuse (20, 22, 24) présente une base commune (20), et
b. les structures porteuses partielles (24), sur lesquelles sont prévus les instruments de mesure de la distance (40), peuvent être déplacées ensemble ou séparément par rapport à la base (20), en particulier de manière linéaire.

3. Dispositif de détection (100, 200, 500, 1000) selon l'une des revendications 1 à 2, présentant les caractéristiques supplémentaires suivantes :
a. les instruments de mesure de la distance (40) sont conçus comme des instruments de mesure de la distance multipoints qui peuvent mesurer simultanément la distance par rapport à la pale de rotor pour une pluralité de directions.

4. Dispositif de détection (100, 200, 500) selon l'une des revendications 1 à 3 présentant les caractéristiques supplémentaires suivantes :
a. les instruments de mesure de la distance (40) pour détecter la face supérieure (18A) et la face inférieure (18B) présentent des directions principales de mesure (8A, 8B) inclinées l'une par rapport à l'autre, les directions principales de mesure (8A, 8B) étant de préférence inclinées l'une par rapport à l'autre selon un angle compris entre 90°et 175 , en particulier de préférence selon un angle compris entre 150° et 175°.

5. Dispositif de détection (300, 400) selon l'une des revendications 1 à 4, présentant les caractéristiques supplémentaires suivantes :
a. le dispositif de détection (100, 400) présente un mécanisme de fixation pour fixer la pale de rotor dans la zone de réception (28).

6. Dispositif de détection (300, 400) selon la revendication 5, dans lequel le mécanisme de mécanisme de fixation présente un contour d'appui (32) et/ou deux mâchoires de maintien (36) disposées en face du contour d'appui (32).

7. Dispositif de détection (300, 400) selon la revendication 6, dans lequel le contour d'appui (32) est disposé sur une tige de maintien (30) déplaçable et/ou les mâchoires de maintien (36) sont déplaçables par rapport à la structure porteuse (20, 22) au moyen de tiges à mâchoire (24).

8. Système de détection (600, 700, 800, 900) pour détecter la forme et/ou l'orientation de pales de rotor (18) d'éoliennes (10), présentant les caractéristiques suivantes :
a. le système de détection (600, 700, 800, 900) dispose d'un dispositif de détection (100, 200, 300, 400, 500, 1000) selon l'une des revendications 1 à 7 pour la détection d'une pale de rotor (18), et
b. le système de détection (600, 700, 800, 900) présente un système de mouvement (70, 80, 84, 90) pour le mouvement relatif du dispositif de détection (1 00, 200, 300, 400, 500, 1000) par rapport à la pale de rotor (18).

9. Système de détection (600) selon la revendication 8, présentant les caractéristiques suivantes :
a. le système de mouvement est conçu comme un instrument volant (70) sans pilote à la manière d'un aéronef à voilure tournante, et
b. le dispositif de détection (500) est monté sur l'instrument volant (70) et peut être amené au moyen de celui-ci jusqu'à la pale de rotor (18) à détecter.

10. Système de détection (700) selon la revendication 8, présentant les caractéristiques suivantes :
a. le système de mouvement comprend une nacelle (80) et un système de levage (84), au moyen duquel la nacelle (80) peut être abaissée et relevée sur une éolienne (10), et
b. le système de détection (500) est monté sur la nacelle (80) et peut être déplacé au moyen de celle-ci le long de la pale de rotor (18).

11. Système de détection (800) selon la revendication 8 présentant la caractéristique suivante :
a. le système de mouvement est conçu comme un système de translation roulant (90), au moyen duquel le dispositif de détection (500) peut être déplacé en translation, présentant de préférence la caractéristique supplémentaire suivante :
b. le système de détection (800) est conçu comme un dispositif à portique qui dispose de deux chariots (94) espacés l'un de l'autre, qui sont reliés entre eux au moyen d'une traverse de portique (96), la zone de réception (28) pour recevoir la pale de rotor (18) étant prévue en dessous de la traverse de portique (96).

12. Système de détection (600, 700, 800) selon l'une des revendications 8 à 11 , présentant les caractéristiques suivantes :
a. le système de détection (600, 700, 800) présente au moins un corps réfléchissant (72, 82, 92) qui peut être monté sur une base du dispositif de détection ou sur le système de mouvement (70, 80, 90), et
b. le système de détection (600, 700, 800) présente au moins un instrument de détection de position au laser (60) pour détecter ledit au moins un corps réfléchissant (72, 82, 92), présentant de préférence la caractéristique supplémentaire suivante :
c. le système de détection (600, 700, 800) présente au moins deux corps réfléchissants (72, 82, 92) qui sont montés à distance l'un de l'autre sur une base de la base du dispositif de détection ou sur le système de mouvement, le système de détection (600, 700, 800) présentant au moins deux instruments de détection de position au laser (60) pour détecter lesdits au moins deux corps réfléchissants (72, 82, 92).

13. Procédé de détection du façonnage et/ou de l'orientation de pales de rotor (18) d'éoliennes (10) présentant les caractéristiques suivantes :
a. le procédé sert à mesurer au moins par tronçons une face supérieure (18A) et une face inférieure (18B) d'un profil d'une pale de rotor (18) d'une éolienne (10), et
b. le procédé a lieu en utilisant un dispositif de détection (100, 200, 300, 400, 500, 1000), qui présente deux instruments de mesure de la distance (40) réalisés sous forme d'instruments de mesure de la distance au laser (40) sans contact, dont l'un est associé au côté supérieur (18A) et l'autre au côté inférieur (18B), et
c. les deux instruments de mesure de la distance au laser (40) sont déplacés dans la direction d'une corde de profil du profil de la pale de rotor (18) par rapport à celle-ci, de telle sorte que les données de position de points de la face supérieure (18A) et de la face inférieure (18B) peuvent être détectées, cette détection se produisant de préférence de manière simultanée, et
d. les données de position de points de la face supérieure (18A) et de la face inférieure (18B) sont combinées dans une structure de données qui comprend les données de position de points de la face supérieure (18A) et de la face inférieure (18B) dans un agencement relatif correct l'une par rapport à l'autre.
